# FASCICULE DE BREVET EUROPEEN

(11) **EP 2 172 388 B1**
(45) Date de publication et mention de la délivrance du brevet: **05.11.2014**
(21) Numéro de dépôt: 09171782.7
(22) Date de dépôt: 30.09.2009
(51) Int. Cl.: B62D 25/16, B60R 13/08, B62D 29/04

(54) **Pare-boue de véhicule permettant l'absorption de vibrations acoustiques**
Akustisch schalldämmernder Kraftfahrzeug Schmutzfänger
Mudguard aloowing acoustic absorption

(30) Priorité: 01.10.2008 FR 0856638
(43) Date de publication de la demande: 07.04.2010
(73) Titulaire: COMPAGNIE PLASTIC OMNIUM, 69007 Lyon (FR)
(72) Inventeur: Gilotte, Philippe, 01470, Benonces (FR); Viot, Frédéric, 01450, Poncin (FR)
(74) Mandataire: Potdevin, Emmanuel Eric

(56) Documents cités:
- DE-A1- 19 634 615
- DE-A1- 19 729 804
- FR-A- 2 816 266
- JP-A- 11 227 635

## Description

La présente invention concerne un pare-boue de véhicule automobile. Un tel pare-boue peut également être désigné « passage de roue ».

Un pare-boue est une pièce de carrosserie de véhicule entourant la partie supérieure d'une roue. Un tel pare-boue est généralement monté sur la caisse du véhicule.

On connaît, notamment de la publication EP-1 382 427, un pare-boue comportant des moyens d'absorption acoustique. Un tel pare-boue comprend un corps en matière plastique comportant au moins une ouverture. Un matériau poreux, par exemple de la moquette, est surmoulé sur le corps du pare-boue de sorte qu'il recouvre l'ouverture de celui-ci. Lorsque ce pare-boue est monté sur la caisse, il existe un logement rempli d'air, également appelé « lame d'air », ménagé entre le pare-boue, notamment sa paroi poreuse, et la caisse. Lorsque les dimensions du logement sont correctement calculées, les ondes acoustiques dues au roulement de la roue sur le sol pénètrent dans le logement, en traversant la paroi poreuse, et sont ensuite piégées dans celui-ci. Le rayonnement acoustique dû au roulement, c'est-à-dire les ondes se propageant dans l'air, notamment dans le dégagement situé entre la roue et la caisse, est alors au moins partiellement absorbé par la lame d'air.

Pour que l'absorption des ondes acoustiques soit efficace, il a été constaté que la profondeur du logement, soit la dimension entre la paroi du pare-boue et celle de la caisse, devait mesurer environ 40 mm.

Or, sur la plupart des véhicules, au vu de l'espacement disponible entre la roue et la caisse, une telle dimension peut être atteinte en partie supérieure du dégagement prévu pour la roue, située en regard de la surface de roulement de la roue, comme montré dans FR 2816 266 A décrivant le préambule de la revendication 1, mais pas en partie latérale de ce dégagement, située en regard du moyeu de la roue. L'absorption des ondes acoustiques dans cette zone n'est donc pas efficace.

L'invention vise à améliorer l'absorption des ondes acoustiques issues du roulement de la roue, notamment en regard du moyeu de la roue, et à diminuer ainsi le bruit dû au roulement.

A cet effet, l'invention a pour objet un ensemble d'un pare-boue et d'une partie de caisse de véhicule, revendiqué par la revendication 1.

Ainsi, le pare-boue est monté sur la caisse de telle sorte qu'il forme avec celle-ci une cavité fermée et étanche, située par exemple en regard du moyeu de la roue. Une paroi du pare-boue délimitant la cavité est alors en contact avec l'environnement extérieur, au voisinage de la roue.

De ce fait, une onde acoustique issue du roulement du véhicule et se dirigeant vers cette paroi est réfléchie sur cette paroi sans la traverser, car cette paroi est étanche à l'air. Toutefois, du fait de la présence de l'espacement entre la paroi et la tôle constituant la caisse, formant par exemple une lame d'air, la paroi du pare-boue vibre lorsque l'onde acoustique l'atteint. L'onde acoustique est alors amortie par la lame d'air avant d'être réfléchie vers la roue, lorsque les dimensions de la paroi et de la cavité sont correctement choisies.

Ainsi, l'invention permet d'assurer une bonne absorption des ondes acoustiques dues au roulement en regard du moyeu de la roue, sans pour autant augmenter l'encombrement du véhicule au niveau de la roue ou modifier sensiblement la structure de la caisse.

L'ensemble selon l'invention comprend également l'une ou plusieurs des caractéristiques de la liste suivante :
- le pare-boue comprend une paroi de fond et au moins une paroi latérale délimitant la cavité, la paroi de fond et éventuellement la paroi latérale étant d'épaisseur plus fine qu'une paroi du pare-boue ne délimitant pas la cavité. De cette façon, la paroi de fond, qui se situe au plus près de la roue et est donc la plus susceptible d'intercepter la trajectoire des ondes acoustiques, vibre plus facilement lorsque l'onde acoustique l'atteint, du fait de son épaisseur réduite. La paroi latérale, si elle est de même épaisseur qu'une paroi du pare-boue ne délimitant pas la cavité, participe à la rigidité du pare-boue au niveau de la cavité. Si elle est moins épaisse qu'une telle paroi, elle permet de faciliter la vibration de la paroi de fond en augmentant le débattement possible de celle-ci, et d'améliorer l'absorption des ondes acoustiques,
- la paroi latérale est réalisée en un matériau souple. La paroi latérale n'est alors pas réalisée en le même matériau que le reste du pare-boue, le pare boue étant notamment fabriqué par comoulage. Ainsi, on facilite également le débattement de la paroi de fond et on augmente l'amortissement offert par la cavité et l'absorption des ondes acoustiques dues au roulement du véhicule,
- au moins une paroi du pare-boue délimitant la cavité, de préférence la paroi de fond, présente une épaisseur comprise entre 0,5 et 2 mm, de préférence entre 1 et 1,7 mm, notamment 1,5 mm. On notera que les fréquences de roulement sont proches de 1000 Hz. Les inventeurs à la base de l'invention se sont aperçus que, pour les matériaux utilisés pour le pare-boue, notamment la matière plastique, une paroi ayant une telle épaisseur était susceptible d'entrer en résonance dans un premier mode de vibration au voisinage de 500 Hz. Elle est donc également susceptible d'entrer en résonance dans un deuxième mode de vibration au voisinage de 1000Hz, correspondant aux fréquences de roulement. Lorsque la paroi résonne, ses vibrations sont amplifiées, ce qui permet d'augmenter l'absorption du bruit par amortissement de l'air dans de la cavité. Une telle épaisseur permet donc d'absorber efficacement le bruit dû au roulement du véhicule,
- une dimension maximale de la cavité, mesurée selon une direction normale à une paroi de la partie de caisse délimitant la cavité est comprise entre 1 et 10 mm, de préférence entre 3 et 8 mm, notamment 5 mm. Une cavité présentant cette dimension permet d'amortir suffisamment l'onde acoustique atteignant une paroi du pare-boue délimitant la cavité, notamment la paroi de fond de celle-ci, sans pour autant augmenter l'encombrement du véhicule au niveau de la roue,
- la dimension de la cavité, mesurée selon une direction normale à la paroi de la partie de caisse délimitant la cavité, est constante sur toute la section de la cavité. De cette façon, la caisse et la paroi de fond sont essentiellement parallèles entre elles et essentiellement parallèles à une paroi latérale d'une roue. Le comportement de la cavité en matière d'absorption est ainsi plus simple à prévoir, celle-ci pouvant être dimensionnée plus aisément pour optimiser l'absorption du bruit. En outre, une telle paroi permet d'absorber de nombreuses ondes acoustiques, et ce, quel que soit l'angle d'incidence de ces ondes relativement à la normale à la paroi,
- la cavité est emplie, lorsque le pare-boue est monté sur le véhicule, par des fibres textiles souples, de préférence sous forme de plaque. On peut de cette façon faire varier le coefficient d'absorption de la cavité par rapport à une cavité formant une lame d'air, ce qui permet dans certains cas, par exemple pour certaines épaisseurs de la cavité, d'optimiser l'absorption des ondes par la cavité. En outre, lorsque les fibres sont agencées sous forme de plaque, un tel élément peut être arrangé pour dépasser légèrement de la cavité. Lorsque le pare-boue est mis en place sur la caisse du véhicule, il est alors compressé entre la caisse et le pare-boue. Il améliore de cette façon l'isolation de la cavité et l'étanchéité de la liaison pare-boue/caisse,
- Le pare-boue peut présenter au moins deux cavités, les cavités étant de préférence adjacentes. Les cavités forment par exemple des alvéoles. On notera qu'une cavité absorbe très efficacement une onde acoustique sur une bande de fréquence assez étroite, contrairement au système de l'état de la technique qui absorbe les ondes acoustiques moins efficacement mais sur une bande de fréquence plus large. Or, en fonction de leur forme ou de leurs dimensions, on peut faire varier légèrement la bande de fréquence pour laquelle l'absorption de la cavité est efficace. Ainsi, en multipliant le nombre de cavités, on élargit la bande de fréquence pour laquelle l'absorption des ondes acoustiques par le pare-boue est efficace, ce qui permet de diminuer encore le bruit de roulement,
- le pare-boue et la caisse sont conformés pour que la paroi de la partie de caisse délimitant la cavité soit verticale, apte de préférence à être placée en regard d'un moyeu de roue de véhicule,
- la portion du pare-boue délimitant la cavité est réalisée en un matériau plastique, éventuellement renforcé de fibres, notamment en un matériau thermoplastique tel que le propylène (PP), éventuellement renforcé de fibres de verre,
- le pare-boue et la partie de caisse sont conformés pour former un logement, au moins une paroi du pare-boue délimitant ce logement étant poreuse. Une paroi de la caisse délimitant ce logement est de préférence essentiellement concentrique à la surface du pare-boue, et apte à être placée en regard d'une surface de roulement d'une roue de véhicule. Ainsi, l'ensemble selon l'invention peut combiner le système d'absorption de l'état de la technique, à l'endroit auquel ce dernier est le plus efficace, c'est à dire lorsqu'on dispose d'un espace important entre la caisse et la roue, et une ou plusieurs cavités fermées selon l'invention, à l'endroit où ce système est le plus adapté, c'est à dire en regard du moyeu de la roue. Un tel ensemble est donc optimisé et permet de diminuer sensiblement le bruit dû au roulement.

L'invention a également pour objet un véhicule comprenant une partie de caisse et un pare-boue monté sur la partie de caisse, au moins une cavité fermée s'étendant entre la partie de caisse et le pare-boue, une portion du pare-boue, délimitant la cavité, étant réalisée en un matériau étanche.

L'invention a également pour objet un pare-boue de véhicule, comprenant au moins une dépression, une portion du pare-boue, délimitant la dépression, étant réalisée en un matériau étanche.

Un tel pare-boue permet de former une cavité telle que définie ci-dessus lorsqu'il est monté sur la caisse. Il peut appartenir à l'ensemble tel que défini ci-dessus et comprendre toutes les caractéristiques définies ci-dessus.

L'invention a également pour objet un procédé de montage d'un pare-boue sur une partie de caisse de véhicule, dans lequel, le pare-boue présentant une dépression, une portion du pare-boue délimitant la dépression étant réalisée en un matériau étanche, on monte le pare-boue sur la partie de caisse de sorte que la concavité de la dépression soit tournée vers la partie de caisse, et que la dépression et la partie de caisse délimitent une cavité fermée.

Optionnellement, préalablement au montage du pare-boue sur la caisse, on emplit la dépression d'une plaque de fibres textiles souple.

L'invention sera mieux comprise à la lecture de la description qui va suivre, donnée uniquement à titre d'exemple et faite en se référant aux dessins dans lesquels :
- la figure 1 est un schéma représentant une vue en coupe transversale d'un véhicule au voisinage de la roue, comprenant un ensemble d'un pare-boue et d'une partie de caisse selon un premier mode de réalisation de l'invention ;
- la figure 2 est une vue en perspective d'un ensemble selon un deuxième mode de réalisation de l'invention, la partie tournée vers l'intérieur du véhicule étant représentée ;
- la figure 3 est une vue en perspective du pare-boue appartenant à l'ensemble de la figure 2, la partie de ce pare-boue tournée vers l'intérieur du véhicule étant représentée.

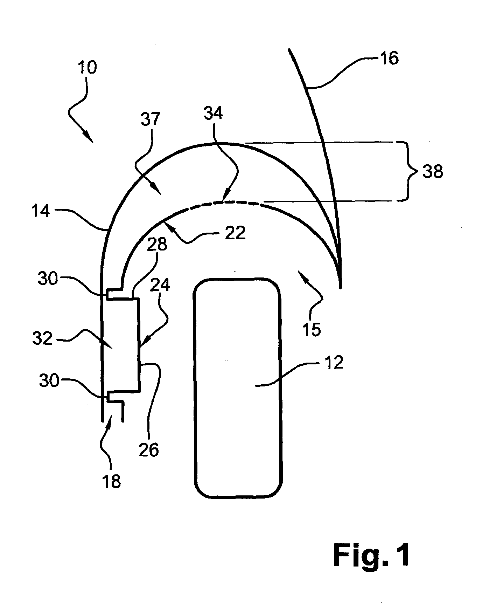

On a représenté sur la figure 1 une partie d'un véhicule automobile 10 située au voisinage d'une roue 12 du véhicule. Le véhicule comprend une caisse en blanc, notamment une partie 14 de celle-ci, réalisée en un matériau métallique et délimitant en partie inférieure un dégagement 15 pour recevoir la roue 12. La partie de caisse 14 comprend plus particulièrement une paroi essentiellement verticale au travers de laquelle passe l'essieu de la roue, cette paroi délimitant une extrémité latérale du dégagement et une paroi délimitant l'extrémité supérieure du dégagement, présentant un profil essentiellement courbe.

Le véhicule comprend des pièces de carrosserie agencées sur la caisse, telles qu'une aile 16 et un pare-boue 18, agencé plus particulièrement sur la partie de caisse 14.

On va décrire plus précisément ci-après le pare-boue 18 du véhicule automobile. Celui-ci est une pièce de carrosserie recouvrant la partie de caisse 14 au niveau du dégagement 15 destiné à recevoir la roue 12, lorsque le pare-boue est monté sur le véhicule.

Le pare-boue 18 comprend une paroi supérieure 20 ayant une section transversale courbe et s'étendant selon sa direction longitudinale suivant une ligne directrice formant un demi-cercle. Cette paroi 20 s'étend sous la partie de caisse 14 en regard de la surface de roulement de la roue 12 lorsque le pare-boue 18 est monté sur le véhicule. Le pare-boue comprend également une paroi interne 22 essentiellement plane et verticale , positionnée sur le véhicule entre la roue 12 et la partie de caisse 14, de façon à être placée en regard d'un moyeu de la roue 12 et autour d'un essieu (non représenté sur les figures) portant la roue 12 lorsque le pare-boue est monté sur le véhicule.

Le pare-boue est réalisé en matière plastique, notamment en un matériau thermoplastique tel que le polypropylène (PP). Le matériau peut être renforcé de fibres, notamment de fibres de verre.

Comme on le voit sur la figure 1, le pare-boue comprend, sur sa paroi interne 22, une dépression 24 ayant une section en U. Cette dépression 24 est plus particulièrement de forme cylindrique et comprend une paroi de fond 26 et une paroi latérale 28.

La paroi de fond 26 est ménagée sur le pare-boue 18 de sorte qu'elle est essentiellement parallèle au reste de la paroi 22 du pare-boue et à la paroi verticale de la partie de caisse 14, sur laquelle est agencée la paroi 22 lorsque le pare-boue 18 est monté sur le véhicule.

En outre, comme on le voit sur la figure 1, la paroi latérale 28 du dégagement 24 est d'épaisseur plus importante que la paroi de fond 26 de celui-ci. La paroi latérale 28 a en effet une épaisseur de 2,5 mm, tandis que la paroi de fond a une épaisseur comprise entre 0,5 et 2 mm, de préférence entre 1 et 1,7 mm, notamment 1,5 mm.

La paroi interne 22 du pare-boue 18 comprend également une portion d'appui 30 périphérique entourant la paroi du pare-boue formant la dépression. Cette portion d'appui est plus particulièrement située à l'extrémité de la paroi latérale 28 qui est opposée à la paroi de fond 26. Cette portion d'appui 30 est conformée pour être en appui contre la paroi verticale de la partie de caisse 14 lorsque le pare-boue est monté sur celle-ci.

Ainsi, lorsque le pare-boue est monté sur la caisse, la concavité de la dépression 24 est tournée vers la caisse et les portions d'appui 30 sont appuyées contre la paroi verticale de la partie de caisse 14, de sorte que le pare-boue associé à la paroi verticale de la partie de caisse 14 forme une cavité 32 remplie d'air. Du fait de l'appui de la portion 30 contre la partie de caisse 14, cette cavité est fermée. Elle est également étanche du fait de la nature des matériaux dont sont constitués le pare-boue 18 et la caisse, et du fait de fixations dans cette zone entre la partie de caisse et le pare-boue.

Comme la paroi de fond 26 est essentiellement parallèle à la portion de paroi de la partie de caisse en blanc, la cavité est d'épaisseur constante correspondant à la profondeur de la dépression, qui est comprise entre 1 et 10 mm, notamment entre 3 et 8 mm, et mesure plus particulièrement 5 mm.

Cette cavité permet d'absorber les vibrations produites par le roulement du véhicule sur le sol. En effet, lorsqu'une onde acoustique due au roulement se dirige vers la paroi 26, elle ne peut pénétrer dans la cavité 32 car la paroi de fond 26 et les parois latérales 28 sont réalisées en un matériau étanche à l'air. La paroi de fond 26 étant très fine, elle vibre sous l'influence de l'onde acoustique. Cette dernière est alors réfléchie vers la roue après avoir été amortie par la lame d'air de la cavité 32. Avec les matériaux et les dimensions évoqués ci-dessus, la paroi de fond entre en résonance pour une fréquence correspondant essentiellement à la fréquence de roulement, environ égale à 1000 Hz, de sorte qu'une onde acoustique produite pour une telle fréquence est absorbée de façon très efficace par la cavité 32.

Au centre de sa paroi supérieure 20, le pare-boue comporte également une ouverture. Une plaque de fibres textiles rigide 34, représentée en pointillé, telle que de la moquette, est mise en place sur le pare-boue 18, de façon à recouvrir l'ouverture 34. Cette plaque de fibres 34 est de préférence surmoulée sur la paroi supérieure 20 du pare-boue 18 lors de la fabrication de celui-ci.

Comme on le voit à la figure 1, en partie supérieure du dégagement prévu pour la roue, le pare-boue est conformé de sorte qu'il existe entre celui-ci et la paroi de la partie de caisse délimitant le dégagement un logement d'épaisseur 38 assez importante, correspondant environ à 40 mm.

Ce logement, ménagé entre la paroi supérieure 20 du pare-boue et la partie de caisse 14, permet donc d'absorber une partie du rayonnement acoustique émis lors du roulement du véhicule. En effet, de telles ondes acoustiques traversent la plaque de fibres 34, cette dernière étant poreuse, de façon à s'introduire dans le logement et sont ensuite piégées dans le logement et atténuées du fait de l'air également présent dans celui-ci.

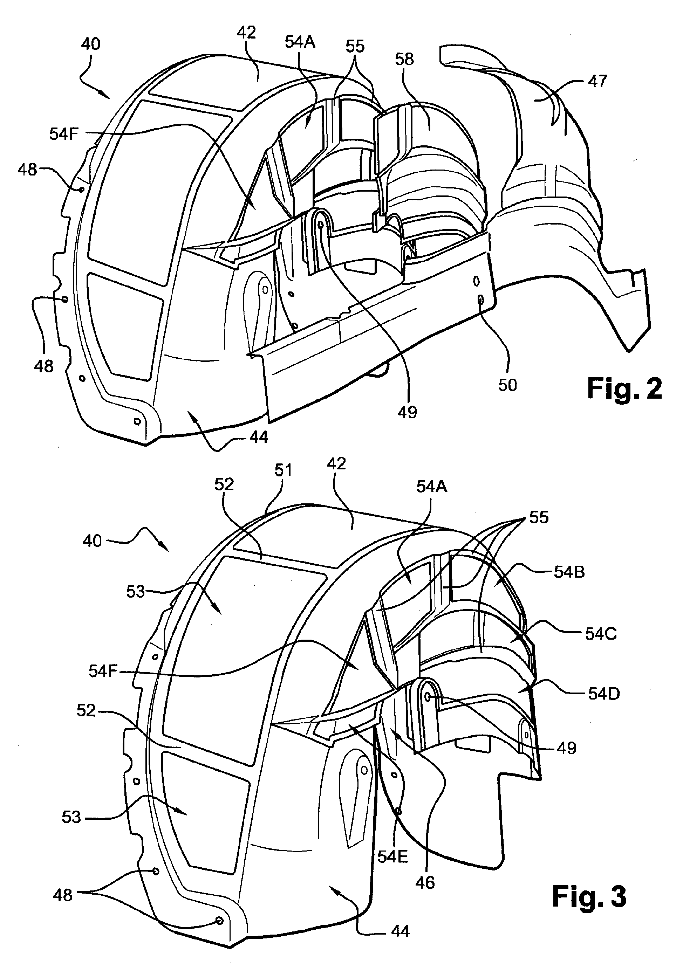

On va maintenant décrire un deuxième mode de réalisation de l'invention à l'aide des figures 2 et 3.

Comme on le voit sur les figures 2 et 3, dans ce mode de réalisation, le pare-boue 40 comporte une paroi supérieure 42 semi-cylindrique située en regard d'une surface de roulement de la roue lorsque le pare-boue est monté sur le véhicule et une paroi 44 essentiellement plane et verticale, tournée vers l'intérieur du véhicule et située en regard du moyeu de la roue lorsque le pare-boue est monté sur le véhicule. Cette paroi comprend un dégagement 46 pour laisser un passage à l'essieu portant la roue du véhicule.

Comme on le voit sur la figure 2, le pare-boue est destiné à être fixé à la caisse en blanc du véhicule, notamment à la partie 47 de celle-ci, dont seulement une sous-partie est représentée ici. Il comporte pour cela, des orifices 48 ménagés sur des portions périphériques de la paroi supérieure 42. Il comprend également des orifices 49 sur sa paroi interne 44, ces orifices 49 étant ménagés au voisinage du dégagement 46. Comme on le voit également sur la figure 2, ces orifices sont destinés à coopérer avec des orifices complémentaires 50 de la partie de caisse 47. Les orifices 48 à 50 permettent la fixation du pare-boue sur la partie de caisse, à l'aide d'éléments de vissage s'engageant dans les orifices complémentaires de la partie de caisse et du pare-boue.

Le pare-boue 40 comprend un corps en matière plastique, réalisé en polypropylène renforcé de fibres de verre. La paroi interne 44 est entièrement réalisée en matière plastique, tandis qu'au niveau de la paroi supérieure 42, le corps comporte un cadre périphérique 51 et des traverses 52 entre lesquelles sont insérées des plaques rigides 53 de fibres textiles, notamment de moquette. Ces plaques 53 peuvent être par exemple surmoulées sur le corps du pare-boue.

Sur sa paroi interne, le pare-boue comporte six dépressions 54A à 54F, ces dépressions étant adjacentes et séparées par des portions d'appui 55 périphériques entourant chaque dépression 54A à 54F. Les portions d'appui 55 sont destinées à être en appui contre la paroi verticale de la partie de caisse 47.

Chaque dépression 54A à 54F comporte une paroi de fond et des parois latérales reliant le fond à la portion d'appui 55. En outre, la forme de chaque dépression est différente. La dépression 54A est de section essentiellement carrée, alors que la dépression 54E est de section essentiellement rectangulaire et très allongée et la dépression 54F présente une section essentiellement triangulaire. Les parois de fond des différentes dépressions 54A à 54F suivent la paroi verticale de la partie de caisse 47 en regard de laquelle elles sont destinées à être positionnées.

Les dépressions 54A à 54D sont remplies chacune de fibres textiles souples. Comme on le voit sur la figure 2, ces dépressions sont remplies à l'aide de la même plaque en fibres textiles 58. Les dépressions 54E et 54F sont présentées sans fibres pour visualiser les cavités.

Comme dans le mode de réalisation précédemment décrit, le pare-boue est monté sur la partie de caisse 47, seulement partiellement représentée sur la figure 2, de sorte que les portions d'appui 55 situées entre les dépressions 54A à 54F soient en appui contre la partie de caisse 47 et que la concavité des dépressions 54A à 54F soit tournée vers la caisse, de sorte que ces dépressions forment respectivement une cavité en association avec la paroi verticale de la partie de caisse 47. La plaque de fibres textiles souple 58 est dans ce cas poinçonnée, lors de la mise en place du pare-boue sur la caisse, entre la partie de caisse 47 et les portions d'appui 55, ce qui permet d'améliorer encore l'étanchéité des cavités formées par les dépressions 54 et la partie de caisse 47.

La plaque fibres textiles souple remplit un rôle d'amortissement des vibrations de la paroi de fond de la cavité, tout comme une lame d'air, celle-ci améliorant le coefficient d'absorption de celui de la lame d'air. Il peut être avantageux d'utiliser des fibres textiles en fonction du dimensionnement de la dépression et de ses parois pour améliorer l'absorption des vibrations, au voisinage d'une fréquence de roulement.

Le pare-boue selon ce mode de réalisation comportant plusieurs cavités adjacentes de formes différentes et ne renfermant pas toutes le même élément d'absorption du rayonnement acoustique, les fréquences propres de résonance des parois de fond des différentes cavités 54A à 54F varient légèrement les unes par rapport aux autres. De ce fait, chaque cavité permet d'absorber de façon efficace une bande de fréquence réduite et décalée par rapport à la bande de fréquence absorbée par les cavités voisines. L'ensemble des cavités permet alors d'absorber les ondes acoustiques sur une bande de fréquence plus large. Un tel système est donc plus avantageux qu'un système comportant une unique cavité.

Ainsi, l'invention permet d'améliorer l'absorption des vibrations acoustiques issues du roulement d'un véhicule automobile.

On notera que l'invention n'est pas limitée à ce qui a été décrit précédemment. En effet, la forme du pare-boue peut ne pas être conforme à l'une de celles décrites. Les matériaux dont est constitué le pare-boue peuvent également ne pas être limités à ceux décrits plus haut. On pourrait par exemple envisager que le pare-boue est réalisé en un matériau plastique non renforcé de fibres.

Un tel pare-boue peut être fixé sur la caisse par tout autre moyen que ceux décrits, par exemple par soudage, rivetage, etc.

De plus, le nombre de cavités décrites peut être égal à tout nombre supérieur ou égal à 1. En outre, la forme des cavités n'est pas limitée aux formes décrites.

En outre, la ou les parois latérales de la cavité peuvent être réalisées en matériau souple pour autoriser le déplacement de la paroi de fond de la cavité et améliorer l'amortissement des ondes acoustiques par la cavité, notamment par un procédé de comoulage. Ces parois latérales peuvent être aussi d'épaisseur plus réduite que la paroi du pare-boue ne délimitant pas la cavité, ce qui permet également d'améliorer l'amortissement des ondes acoustiques par la cavité.

Le pare-boue peut également ne pas comprendre de paroi supérieure formée à l'aide d'un matériau poreux. Il pourrait par exemple être entièrement constitué en un matériau plastique.

## Revendications

1. Ensemble d'un pare-boue (18 ; 40) et d'une partie de caisse (14 ; 47) de véhicule, le pare-boue (18 ; 40) et la partie de caisse (14 ; 47) sont conformés pour former au moins une cavité fermée (32) s'étendant entre la partie de caisse et le pare-boue lorsque ce dernier est monté sur la caisse, une portion du pare-boue (24 ; 54A - 54G), délimitant la cavité, étant réalisée en un matériau étanche, et **caractérisé en ce que** la cavité est emplie, lorsque le pare-boue est monté sur le véhicule, par des fibres textiles, de préférence sous forme d'une plaque (58), et **en ce que** la paroi de la partie de caisse (14 ; 47) délimitant la cavité est verticale, et de préférence apte à être placée en regard d'un moyeu de roue de véhicule.

2. Ensemble selon la revendication précédente, dans lequel le pare-boue (18 ; 40) comprend une paroi de fond (26) et au moins une paroi latérale (28) délimitant la cavité (32), la paroi de fond et éventuellement la paroi latérale étant d'épaisseur plus fine qu'une paroi du pare-boue ne délimitant pas la cavité.

3. Ensemble selon l'une quelconque des revendications précédentes, dans lequel la paroi latérale est réalisée en un matériau souple, par exemple par un procédé de comoulage.

4. Ensemble selon l'une quelconque des revendications précédentes, dans lequel au moins une paroi (26) du pare-boue délimitant la cavité, de préférence la paroi de fond (26), présente une épaisseur comprise entre 0,5 et 2 mm, de préférence entre 1 et 1,7 mm, notamment 1,5 mm.

5. Ensemble selon l'une quelconque des revendications précédentes, dans lequel une dimension maximale de la cavité (32) mesurée selon une direction normale à une paroi de la partie de caisse délimitant la cavité est comprise entre 1 et 10 mm, de préférence entre 3 et 8 mm, notamment 5 mm.

6. Ensemble selon l'une quelconque des revendications précédentes, dans lequel la dimension de la cavité (32) mesurée selon une direction normale à la paroi de la partie de caisse est constante sur toute la section de la cavité.

7. Ensemble selon l'une quelconque des revendications précédentes, dans lequel le pare-boue présente au moins deux cavités (54A-54F), ces cavités étant de préférence adjacentes.

8. Ensemble selon l'une quelconque des revendications précédentes, dans lequel la portion (26, 28 ; 54A -54G) du pare-boue est réalisée en un matériau plastique, éventuellement renforcé de fibres, notamment en un matériau thermoplastique tel que le polypropylène (PP), éventuellement renforcé de fibres de verre.

9. Ensemble selon l'une quelconque des revendications précédentes, dans lequel le pare-boue et la partie de caisse sont conformés pour former un logement, au moins une paroi du pare-boue (22 ; 42) délimitant ce logement étant poreuse.

10. Véhicule, **caractérisé en ce qu'**il comprend une partie de caisse (14 ; 47) et un pare-boue (18 ; 40) monté sur la partie de caisse, au moins une cavité fermée (32) s'étendant entre la partie de caisse et le pare-boue, une portion du pare-boue (24 ; 54A - 54F), délimitant la cavité, étant réalisée en un matériau étanche.

11. Pare-boue (18 ; 40) de véhicule, **caractérisé en ce qu'**il présente au moins une dépression (24 ; 54A -54G), une portion du pare-boue, délimitant la dépression, étant réalisée en un matériau étanche.

12. Procédé de montage d'un pare-boue (18 ; 40) sur une partie de caisse (14 ; 47) de véhicule, **caractérisé en ce que**, le pare-boue (18 ; 40) présentant une dépression (24 ; 54A -54F), une portion du pare-boue, délimitant la dépression, étant réalisée en un matériau étanche, on monte le pare-boue sur la partie de caisse de sorte que la concavité de la dépression (24 ; 54A -54F) soit tournée vers la partie de caisse, et que la dépression et la partie de caisse délimitent une cavité fermée (32).

13. Procédé selon la revendication précédente, dans lequel, préalablement au montage du pare-boue sur la partie de caisse, on emplit la dépression avec une plaque de fibres textiles (58).

## Patentansprüche

1. Schmutzfängereinheit (18; 40) eines Fahrzeugkarosserieteils (14; 47), wobei der Schmutzfänger (18; 40) und der Karosserieteil (14; 47) ausgebildet sind, um mindestens einen geschlossenen Hohlraum (32), der sich zwischen dem Karosserieteil und dem Schmutzfänger erstreckt, wenn dieser Letztere auf die Karosserie montiert ist, zu bilden, wobei ein Abschnitt des Schmutzfängers (24; 54A - 54G), der den Hohlraum abgrenzt, aus einem dichten Werkstoff hergestellt ist, und
**dadurch gekennzeichnet, dass**
der Hohlraum beim Montieren auf das Fahrzeug mit Textilfasern gefüllt wird, vorzugsweise in Form einer Platte (58), und dass die Wand des Karosserieteils (14; 47), die den Hohlraum abgrenzt, vertikal ist und vorzugsweise geeignet, um gegenüber einer Fahrzeugradnabe platziert zu werden.

2. Einheit nach dem vorhergehenden Anspruch, bei der der Schmutzfänger (18; 40) eine Bodenwand (26) und mindestens eine Seitenwand (28), die den Hohlraum (32) abgrenzt, aufweist, wobei die Bodenwand und eventuell die Seitenwand eine feinere Stärke haben als eine Wand des Schmutzfängers, die den Hohlraum nicht abgrenzt.

3. Einheit nach einem der vorhergehenden Ansprüche, bei der die Seitenwand aus einem biegsamen Werkstoff hergestellt ist, zum Beispiel durch ein gemeinsames Formen.

4. Einheit nach einem der vorhergehenden Ansprüche, bei der mindestens eine Wand (26) des Schmutzfängers, die den Hohlraum abgrenzt, vorzugsweise die Bodenwand (26), eine Stärke zwischen 0,5 und 2 mm, vorzugsweise zwischen 1 und 1,7 mm, insbesondere 1,5 mm aufweist.

5. Einheit nach einem der vorhergehenden Ansprüche, bei der ein maximales Maß des Hohlraums (32) entlang einer Richtung senkrecht zu einer Wand des Karosserieteils, die den Hohlraum abgrenzt, gemessen zwischen 1 und 10 mm, vorzugsweise zwischen 3 und 8 mm, insbesondere 5 mm liegt.

6. Einheit nach einem der vorhergehenden Ansprüche, bei der das Maß des Hohlraums (32) entlang einer Richtung senkrecht zu der Wand des Karosserieteils gemessen auf dem gesamten Querschnitt des Hohlraums konstant ist.

7. Einheit nach einem der vorhergehenden Ansprüche, bei der der Schmutzfänger mindestens zwei Hohlräume (54 - 54F) aufweist, wobei diese Hohlräume vorzugsweise nebeneinander liegen.

8. Einheit nach einem der vorhergehenden Ansprüche, bei der der Abschnitt (26, 28; 54A - 54G) des Schmutzfängers aus einem Kunststoffmaterial hergestellt ist, das eventuell mit Fasern verstärkt ist, insbesondere ein Thermoplastmaterial, wie zum Beispiel Polypropylen (PP), das eventuell mit Glasfasern verstärkt ist.

9. Einheit nach einem der vorhergehenden Ansprüche, bei der der Schmutzfänger und der Karosserieteil ausgebildet sind, um eine Aufnahme zu bilden, wobei mindestens eine Wand des Schmutzfängers (22; 42), die diese Aufnahme abgrenzt, porös ist.

10. Fahrzeug, **dadurch gekennzeichnet, dass** es einen Karosserieteil (14; 47) und einen Schmutzfänger (18; 40), der auf den Karosserieteil montiert ist, aufweist, wobei sich mindestens ein geschlossener Hohlraum (32) zwischen dem Karosserieteil und dem Schmutzfänger erstreckt, wobei ein Abschnitt des Schmutzfängers (24; 54A - 54F), der den Hohlraum abgrenzt, aus einem dichten Werkstoff hergestellt ist.

11. Fahrzeugschmutzfänger (18; 40), **dadurch gekennzeichnet, dass** er mindestens eine Vertiefung (24; 54A - 54G) aufweist, wobei ein Abschnitt des Schmutzfängers, der die Vertiefung abgrenzt, aus einem dichten Werkstoff hergestellt ist.

12. Montageverfahren eines Schmutzfängers (18; 40) auf einem Fahrzeugkarosserieteil (14; 47), **dadurch gekennzeichnet, dass** der Schmutzfänger (18; 40) eine Vertiefung (24; 54A - 54F) aufweist, wobei ein Abschnitt des Schmutzfängers, der die Vertiefung abgrenzt, aus einem dichten Werkstoff hergestellt ist, man den Schmutzfänger auf den Karosserieteil derart montiert, dass die Konkavität der Vertiefung (24; 54A - 54F) zu dem Karosserieteil gerichtet ist, und dass die Vertiefung und der Karosserieteil einen geschlossenen Hohlraum (32) abgrenzen.

13. Verfahren nach dem vorhergehenden Anspruch, bei dem man vor der Montage des Schmutzfängers auf dem Karosserieteil die Vertiefung mit einer Textilfaserplatte (58) füllt.

## Claims

1. Assembly of a vehicle mudguard (18; 40) and body part (14; 47), the mudguard (18; 40) and the body part (14; 47) are shaped to form at least one closed cavity (32) extending between the body part and the mudguard when the latter is mounted on the body, a portion of the mudguard (24; 54A-54G), delimiting the cavity, being made of a waterproof material, and **characterised in that** the cavity is filled, when the mudguard is mounted on the vehicle, with textile fibres, preferably in the form of a plate (58), and **in that** the wall of the body part (14; 47) delimiting the cavity is vertical, and can preferably be placed opposite a vehicle wheel hub.

2. Assembly according to the preceding claim, wherein the mudguard (18; 40) comprises a bottom wall (26) and at least one side wall (28) delimiting the cavity (32), the bottom wall and optionally the side wall being thinner than a wall of the mudguard not delimiting the cavity.

3. Assembly according to any of the preceding claims, wherein the side wall is made of a flexible material, for example by a co-moulding method.

4. Assembly according to any of the preceding claims, wherein the thickness of at least one wall (26) of the mudguard delimiting the cavity, preferably the bottom wall (26), is between 0.5 and 2 mm, preferably between 1 and 1.7 mm, in particular 1.5 mm.

5. Assembly according to any of the preceding claims, wherein a maximum dimension of the cavity (32) measured in a direction normal to a wall of the body part delimiting the cavity is between 1 and 10 mm, preferably between 3 and 8 mm, in particular 5 mm.

6. Assembly according to any of the preceding claims, wherein the dimension of the cavity (32) measured in a direction normal to the wall of the body part is constant over the entire cross-section of the cavity.

7. Assembly according to any of the preceding claims, wherein the mudguard has at least two cavities (54A-54F), these cavities preferably being adjacent.

8. Assembly according to any of the preceding claims, wherein the portion (26, 28; 54A-54G) of the mudguard is made of a plastic material, optionally reinforced with fibres, in particular a thermoplastic material such as polypropylene (PP), optionally reinforced with glass fibres.

9. Assembly according to any of the preceding claims, wherein the mudguard and the body part are shaped to form a housing, at least one wall of the mudguard (22; 42) delimiting this housing being porous.

10. Vehicle, **characterised in that** it comprises a body part (14; 47) and a mudguard (18; 40) mounted on the body part, at least one closed cavity (32) extending between the body part and the mudguard, a portion of the mudguard (24; 54A-54F), delimiting the cavity, being made of a waterproof material.

11. Vehicle mudguard (18; 40), **characterised in that** it has at least one depression (24; 54A-54G), a portion of the mudguard, delimiting the depression, being made of a waterproof material.

12. Method of mounting a vehicle mudguard (18; 40) on a body part (14; 47), **characterised in that** the mudguard (18; 40) having a depression (24; 54A-54F), a portion of the mudguard, delimiting the depression, being made of a waterproof material, the mudguard is mounted on the body part so that the concavity of the depression (24; 54A-54F) faces the body part, and so that the depression and the body part delimit a closed cavity (32).

13. Method according to the preceding claim, wherein, prior to mounting the mudguard on the body part, the depression is filled with a plate of textile fibres (58).
